Europäisches Patentamt

European Patent Office

Office européen des brevets

(11) Publication number: **0 032 761**
**B1**

# EUROPEAN PATENT SPECIFICATION

(45) Date of publication of patent specification: 25.07.84

(51) Int. Cl.³: **G 02 B 5/16**

(21) Application number: **81200019.8**

(22) Date of filing: **12.01.81**

(54) **Method of producing an optical communication element and a device for carrying out the method.**

(30) Priority: **22.01.80 NL 8000382**

(43) Date of publication of application:
**29.07.81 Bulletin 81/30**

(45) Publication of the grant of the patent:
**25.07.84 Bulletin 84/30**

(84) Designated Contracting States:
**BE DE FR GB IT NL SE**

(56) References cited:
**DE - A - 2 355 854**
**DE - A - 2 528 517**
**DE - A - 2 724 155**
**FR - A - 2 370 295**
**FR - A - 2 424 612**
**US - A - 4 138 193**
**US - A - 4 169 657**

(73) Proprietor: N.V. Philips' Gloeilampenfabrieken
Groenewoudseweg 1
NL-5621 BA Eindhoven (NL)

(72) Inventor: Franken, Adrianus Jacobus Jozef
c/o INT. OCTROOIBUREAU B.V. Prof. Holstlaan 6
NL-5656 AA Eindhoven (NL)

(74) Representative: Auwerda, Cornelis Petrus et al,
INTERNATIONAAL OCTROOIBUREAU B.V. Prof.
Holstlaan 6
NL-5656 AA Eindhoven (NL)

Courier Press, Leamington Spa, England.

## Description

The invention relates to a method of producing an optical communication element for incorporation in an optical telecommunication cable, the element comprising at least one optically conductive glass fibre longitudinally bonded to a metal tape by means of an adhesive.

The invention also relates to a device for carrying out the method.

The optical communication element to be produced according to the invention is intended to be incorporated in optical telecommunication cables. The optical conductive fibres are incorporated in such elements before they are assembled into cables to strengthen the optical fibres. Furthermore, unprotected glass fibres are very susceptible to bending which causes the optical properties of the glass fibres to deteriorate considerably. In addition, glass fibres are sensitive to stress corrosion.

In the United States Patent Specification US—A—4,138,193 a method is described in which some optical glass fibres which have been coated with a conventional layer, are bonded to a metal tape by means of an adhesive. The glass fibres are covered with a polyester film. The metal tape may be wound in the form of a spiral around a core for producing an optical cable. Compared with a synthetic resin material tape the use of a metal tape has the advantage that the element is stronger and has a greater resistance to temperature changes owing to the relatively low coefficient of expansion of metal. The element according to the said US patent is not moisture resisant since all synthetic resin materials and, consequently, also the polyester cover film are to some extent permeable to moisture.

The invention provides a method for the production of an element which is stronger than the known element.

In addition, the element produced according to the invention has an improved resistance to temperature changes. In accordance with the special embodiment an element is produced which has improved resistance to the influence of moisture.

The basic notion for obtaining a stronger element is based on the fact that a glass fibre, when subjected to axial compressive stress, can absorb a higher tensile load than a glass fibre which is not subjected to axial compressive stress and that such a glass fibre is not sensitive to stress corrosion, which only occurs at tensile load. In order to obtain an element which is optically resistant to temperature changes the metal and the glass of the glass fibres must have approximately equal coefficients of thermal expansion. In order to obtain an element which is sealed in a moisture-tight manner, which is important to prevent corrosion from occurring, a metal envelope is used to ensure that an adequate seal is obtained.

According to the invention the method of producing an optical communication element of the type described above is characterized in that the optical fibre is applied to the metal tape with an adhesive which has not yet been cured, the metal tape being thereafter passed around a drum, the surface of the metal tape onto which the optical fibre has been applied facing away from the drum and the adhesive being cured during its passage around the drum, the diameter of the drum, the thickness of the metal tape and the diameter of the optical fibre being chosen so that the path length of the metal tape around the drum is at least 0.5 parts per thousand shorter than the path length of the optical fibre, whereby upon leaving the drum an axial compressive force is exerted onto the optical fibre inducing a reduction of length of the fibre by a corresponding value.

In the optical communication element produced according to the invention the glass fibre is bonded to the metal tape in a state of axial compressive stress.

A method for the production of optical communication elements in which the glass fibres are kept under an axial compressive stress is known *per se* from German patent application DE—A—2701650 (or from French patent application FR—A—2.370.295). According to the known method the fibre is coated with a layer of a synthetic resin material which adheres to the glass fibre. Said layer is provided around the glass fibre by means of extrusion. When the synthetic resin material coat is cooled, it shrinks and subjects the glass fibre to an axial compressive stress. The known method has the drawback that it is difficult to adjust the compressive stress accurately. In addition, the compressive stress decreases slowly with time and decreases more rapidly when the temperature is increased, owing to a certain relaxation of the synthetic resin material.

In the Netherlands paten application 7507580 (corresponding to DE—A—2.528.517) a method is described in which an optical glass fibre is glued to a synthetic resin material tape and is thereafter passed between a pair of rollers which grip the tape and apply a tensile stress to draw the glass fibre from the melt. The tape is, however formed into an S-shape by means of the rollers to avoid any pretension in the coated tape. The effect of this is that the glass fibre is not produced in a state of axial compressive stress.

In a preferred embodiment of the method according to the invention a molten hot melt adhesive is applied onto the metal tape and the hot melt adhesive is cured on the drum by solidifying.

In a further preferred embodiment the drum does not rotate and is heated at the feeder side of the metal tape and is cooled at the discharge side of the metal tape.

In a special embodiment whereby the produced optical communication element is particularly resistant to moisture, the metal tape, after bonding the optical fibre, is folded-up to form a tube and is thereafter sealed by soldering.

Preferably a foam or gel is applied into the folded-up metal tape. This prevents moisture from being distributed over the overall length of the element in case of any leakage in the metal tape or the soldered seam.

In still another preferred embodiment of the method according to the invention a metal tape made of a Fe-Ni-alloy having 36% by weight of Ni and an optical fibre of quartz glass are used.

In this embodiment the metal tape has approximately the same coefficient of thermal expansion as the glass fibre.

The same applies to a preferred embodiment in which a metal tape made of a Fe-Cr-alloy having 17 to 19% by weight Cr and an optical fibre made of a glass having a coefficient of thermal expansion of 9 to 11 × 10⁻⁶ C are used.

The invention also relates to a device for carrying out the above described method, said device comprising first feeder means for a metal tape, means for application of an adhesive onto the metal tape, second feeder means for applying one or more optical fibres longitudinally onto the tape at the side of the adhesive, a drum around which the metal tape carrying the adhesive and optical fibre(s) is guided, whereby the diameter of the drum in relation to the thickness of the metal tape and the diameter of the optical fibre(s) is chosen so that the path length of the metal tape around the drum is at least 0.5 parts per thousand shorter than the path length of the optical fibre(s), and means for curing the adhesive during its passage around the drum.

In a special embodiment the device further comprises elements for folding-up the metal tape into a tube and for sealing it by soldering.

In another favourable embodiment the device comprises an element for applying a foam or a gel into the folded-up tape.

The invention will now be further explained by way of example with reference to the accompanying drawing, in which:

Fig. 1 shows a section transverse to the fibres of an embodiment of the optical communication element produced according to the invention (comprising two optical conductive glass fibres),

Fig. 2 shows a second embodiment of the same element folded up into a tube and

Fig. 3 shows schematically an embodiment of a suitable device for producing an element as shown in Fig. 1.

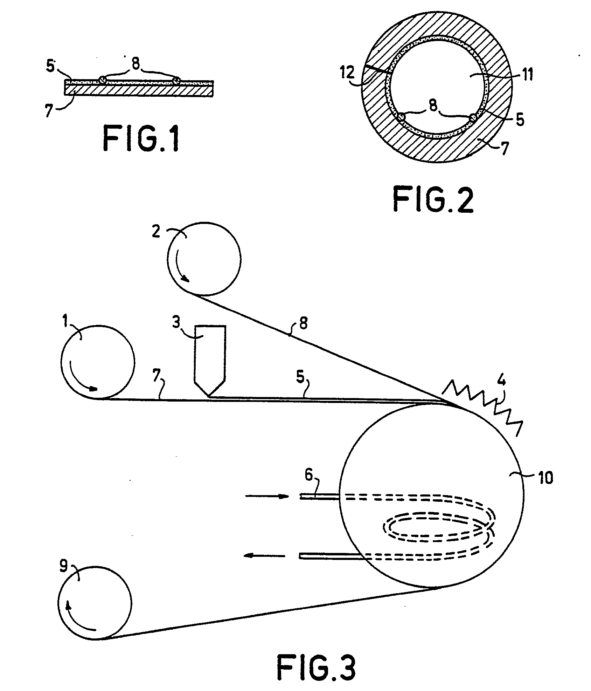

Fig. 1 shows a cross-section of an optical communication element produced according to the invention. The element comprises one or more (two in the embodiment shown) optical fibres 8 which are bonded to a metal tape 7 by means of an adhesive 5. The fibres have been subjected to an axial compressive stress. All type of optical fibres such as, for example, "graded index" fibres, soft-glass fibres, quartz fibres, etc. may be used as optical fibres in the element produced according to the invention. The optical fibres may have been provided, for example immediately after the fibres have been drawn from the melt, with a synthetic resin material coating. All known adhesives which are suitable for bonding glass to metal may be used as the adhesive (5). When the glass fibres have been provided with a synthetic resin material coating, an adhesive must be used by means of which the synthetic resin material can be bonded to metal. In order to make a rapid and simple manner of protection possible, rapidly curing types of adhesive are preferably used. Particularly suitable are the so-called hot melt adhesives. These types of adhesives are described in "Hot melt adhesives, D. L. Bateman, 1978", which is incorporated in this description by reference.

The metal tape 7 may consist of any metal or metal alloy which can be worked into a tape. Preferably, however, metals or metal alloys are used which have approximately the same coefficient of expansion as the glass fibres. When the coefficient of expansion of the metal of the metal tape is approximately equal to the coefficient of expansion of the glass of the optical fibre, an element is obtained which is adequately resistant to temperature fluctuations. When soft-glass fibres having a coefficient of thermal expansion of 9 to 11 × 10⁻⁶ °C are used, a metal tape is preferably used which is produced from an iron-chromium alloy having 17 to 19% by weight of chromium. In combination with quartz fibres preference is given to a metal tape which is produced from an iron-nickel alloy having 36% by weight of nickel.

In the element produced according to the invention the optical fibres are bounded to a metal tape in a state of axial compressive stress. When the element is subjected to a tensile load, the compressive stress must be overcome before tensile stress can be applied to the fibres. This results in an increase of the tensile strength of optical fibres in the element by a value which corresponds to the compressive stress. In order to obtain a sufficient increase of tensile strength it is recommended to bond the fibres at such an axial compressive stress that the length of the fibres is shortened by at least 0.5 parts per thousand.

The element shown in Fig. 1 may be worked into an optical cable in several manners. A plurality of elements of Fig. 1 can be stacked and the whole assembly provided with a suitable jacket. In accordance with a further method the element of Fig. 1 can be spiraly wound around a core which takes up the pull on the cable in use, whereafter the whole assembly is provided with a cable jacket. In short, all known techniques can be used to work the elements into a cable.

Fig. 2 shows a further embodiment of the element produced according to the invention. The embodiment shown in Fig. 2 is produced by folding up the metal tape of the embodiment of Fig. 1 into a tube. To make the element moisture-resistant, the edges of the metal tape are sealed by soldering in the region of reference numeral 12. The cavity 11 can be filled up by injecting a foam or a gel. This prevents moisture from being distributed over the overall length of the element in case of any leakage in the metal tape 7 or the soldered seam 12.

The invention provides a particularly simple and practical method of obtaining an optical communication element of the type described above. In addition, the invention provides a device with which this method can be carried out. This method and the device will now be explained with reference to Fig. 3, which shows the device schematically.

The invention can be explained as follows. A metal tape 7 is unwound from a feed real 1. The metal tape may, for example, consist of steel having a modulus of elasticity of 21,000 kg per cm² and may be 0.1 mm thick and 3 mm wide. By means of an adhesive dispensing and spreading device (3) at a suitable adhesive, for example a hot melt adhesive, is applied to the metal tape. In this way an adhesive layer 5 is obtained on the metal tape. An optical fibre 8 is guided from feed reel 2 into the adhesive layer on the metal tape. An optical fibre having a diameter of 0.1 mm made of a glass having a modulus of elasticity of 7,000 kg per mm² may be used. The procedure should be such that the adhesive melt has not yet solidified in the region of the first contact of the optical fibre with the metal tape. This may require the provision of some heating elements 4. These heating elements may of course be alternatively provided in other positions or, optionally, in a greater or smaller number.

The metal tape 7 supporting the adhesive layer 5 and optical fibre 8 are slid around a stationary drum 10, the aim being that the adhesive layer solidifies during the passage of the tape around the drum. To achieve this it may be necessary to provide the drum with a cooling coil 6, through which cooling water is passed. Alternatively, it is of course possible to ensure solidification of the melt adhesive during the passage around the drum by means of air cooling, etc. The finished product is then discharged from the drum 10 and wound on a reel 9. Several feed reels 2 may of course be used when more than one optical fibre must be applied to the metal tape 7. The melt adhesive 5 can be applied in the liquid state onto the metal tape 7 by means of the adhesive dispensing divice or in the form of a film which is induced to melt by heating elements 4.

When a drum 10 having a radius of 60 mm is used the compressive stress causes the optical fibre to shrink 1.5 per thousand in the above-described example, which means in this example that the optical fibre is not relieved of compressive stress until the applied load exceeds 10 kg.

In manufacturing the embodiment of Fig. 2, one or more elements, not shown, must be provided between drum 10 and winding reel 9 by means of which the metal tape 7 can be folded up into a tube and sealed by soldering. In addition, the arrangement may comprise an element, not shown, by means of which a foam or a gel can be introduced into the folded-up cable.

**Claims**

1. A method of producing an optical communication element for incorporation in an optical telecommunication cable, the element comprising at least one optical fibre (8) longitudinally bonded to a metal tape (7) by means of an adhesive (5), characterized in that the optical fibre is applied to the metal tape with an adhesive which has not yet been cured, the metal tape being thereafter passed around a drum (10), the surface of the metal tape onto which the optical fibre has been applied facing away from the drum and the adhesive being cured during its passage around the drum, the diameter of the drum, the thickness of the metal tape and the diameter of the optical fibre being chosen so that the path length of the metal tape around the drum is at least 0.5 parts per thousand shorter than the path length of the optical fibre, whereby upon leaving the drum an axial compressive force is exerted onto the optical fibre inducing a reduction of length of the fibre by a corresponding value.

2. A method as claimed in Claim 1, characterized in that a molten hot melt adhesive is applied onto the metal tape and the hot melt adhesive is cured on the drum by solidifying.

3. A method as claimed in Claim 1 or Claim 2, characterized in that the drum does not rotate and is heated at the feeder side of the metal tape and is cooled at the discharge side of the metal tape.

4. A method as claimed in any one of Claims 1 to 3, characterized in that after bonding the optical fibre the metal tape is folded up to form a tube and is thereafter sealed by soldering.

5. A method as claimed in Claim 4, characterized in that a foam or a gel is applied into a folded-up metal tape.

6. A method as claimed in any one of Claims 1 to 5, characterized in that a metal tape made of a Fe-Ni-alloy having 36% by weight of Ni and an optical fibre of quartz glass are used.

7. A method as claimed in any one of Claims 1 to 5, characterized in that a metal tape made of a Fe-Cr-alloy having 17 to 19% by weight Cr and an optical fibre made of a glass having a coefficient of thermal expansion of 9 to 11 x 10⁻⁶ °C are used.

8. Device for carrying out the method as claimed in any one of the preceding Claims comprising first feeder means (1) for a metal tape (7), means (3) for application of an adhesive (5) onto the metal tape, second feeder means (2) for applying one or more optical fibres (8) longitudinally onto the tape at the side of the adhesive, a drum (10) around which the metal tape carrying the adhesive and optical fibre(s) is guided, whereby the diameter of the drum in relation to the thickness of the metal tape and the diameter of the optical fibre(s) is chosen so that the path length of the metal tape around the drum is at least 0.5 parts per thousand shorter than the path length for the optical fibre(s), and means (6) for curing the adhesive during its passage around the drum.

9. A device as claimed in Claim 8, further comprising elements for folding-up the metal tape into a tube and for sealing it by soldering.

10. A device as claimed in Claim 8 or Claim 9, further comprising an element for applying a foam or a gel into the folded-up tape.

## Patentansprüche

1. Verfahren zur Herstellung eines optischen Kommunikationselementes zum Einbauen in ein optisches Telekommunikationskabel, wobei das Element wenigstens eine optische Faser (8) umfasst, die durch einen Kleber (5) in der Längsrichtung auf einem Metallstreifen (7) befestigt ist, dadurch gekennzeichnet, dass die optische Faser mit einem Kleber, der noch nicht ausgehärtet ist, auf dem Metallstreifen befestigt wird, dann der Metallstreifen auf denen Oberfläche die optische Faser von der Trommel abgewandt angebracht ist, um eine Trommel (10) geführt wird und der Kleber während der Führung um die Trommel ausgehärtet wird, wobei der Durchmesser der Trommel, die Dicke des Metallstreifens und der Durchmesser der optischen Faser derart gewählt sind, dass die Weglänge des Metallstreifens um die Trommel um mindestens 0,5 pro mille kleiner ist als die Weglänge der optischen Faser, wodurch beim Verlassen der Trommel auf die optische Faser eine axiale Druckkraft ausgeübt wird, durch die die Länge der Faser um einen entsprechenden Wert verringert wird.

2. Verfahren nach Anspruch 1, dadurch gekennzeichnet, dass ein geschmolzener heisser Schmelzkleber auf dem Metallstreifen angebracht wird, und der heisse Schmelzkleber auf der Trommel durch Erstarren ausgehärtet wird.

3. Verfahren nach Anspruch 1 oder 2, dadurch gekennzeichnet, dass die Trommel sich nicht dreht, an der Zufuhrseite des Metallstreifens erhitzt und an der Abführungsseite des Metallstreifens abgekühlt wird.

4. Verfahren nach einem der Ansprüche 1 bis 3, dadurch gekennzeichnet, dass nach dem Aufkleben der optischen Faser der Metallstreifen zu einem Zylinder gefaltet und danach durch Verlöten abgedichtet wird.

5. Verfahren nach Anspruch 4, dadurch gekennzeichnet, dass ein Schaum oder ein Gel in den gefalteten Metallstreifen engebracht wird.

6. Verfahren nach einem der Ansprüche 1 bis 5, dadurch gekennzeichnet, dass ein Metallstreifen aus einer Fe-Ni-Legierung mit 36 Gew.% Ni und eine optische Faser aus Quartzglas verwendet werden.

7. Verfahren nach einem der Ansprüche 1 bis 5, dadurch gekennzeichnet, dass ein Metallstreifen aus einer Fe-Cr-Legierung mit 17 bis 19 Gew.% Cr und eine optische Faser aus einem Glas mit einem thermischen Ausdehnungskoeffizienten von 9 bis $11 \times 10^{-6}/°C$ verwendet werden.

8. Vorrichtung zum Durchführen des Verfahrens nach einem der vorstehenden Ansprüche mit ersten Zuführungsmitteln (1) für einen Metallstreifen (7), Mitteln (3) zum Anbringen eines Kleber (5) auf den Metallstreifen, mit zweiten Zuführungsmitteln (2) zum Anbringen einer oder mehrerer optischer Fasern (8) in der Längsrichtung auf den Metallstreifen auf der Seite des Kleber (5), einer Trommel (10), um die der Metallstreifen mit dem Heftmittel und der (den) optischen Faser(n) geführt wird, wobei der Durchmesser der Trommel in bezug auf die Dicke des Metallstreifens und dem Durchmesser der optischen Faser(n) derart gewählt ist, dass die Weglänge des Metallstreifens um die Trommel um wenigstens 0,5 pro mille kürzer ist als die Weglänge der optischen Faser(n) und Mitteln (6) zum Aushärten des Kleber während der Führung um die Trommel.

9. Vorrichtung nach Anspruch 8, mit zusätzlichen Elementen · zum Falten des Metallstreifens zu einem Zylinder und zum Abdichten desselben durch Verlöten.

10. Vorrichtung nach Anspruch 8 oder 9, mit einem Element zum Einbringen eines Schaums oder eines Gels in dem gefaltenen streifen.

## Revendications

1. Procédé permettant de réaliser un élément de communication optique pour l'incorporation dans un câble de télécommunication optique, l'élément comportant au moins une fibre optique (8), fixée longitudinalement à une bande métallique (7) à l'aide d'un adhésif (5), caractérisé en ce que la fibre optique est appliquée sur la bande métallique à l'aide d'un adhésif que n'est pas encore durci, la bande métallique passant ensuite par un tambour (10), la surface de la bande métallique sur laquelle a été appliquée la fibre optique étant située à l'opposé du tambour et l'adhésif étant durci pendant son passage autour du tambour, le diamètre du tambour, l'épaisseur de la bande métallique et le diamètre de la fibre optique étant choisis de façon que la longueur du trajet de la bande métallique autour du tambour soit plus courte d'au moins 0,5 pour mille que la longueur du trajet de la fibre optique, de façon qu'après avoir quitté le tambour, la fibre optique soit soumise à une force de compression axiale de façon à provoquer une réduction d'une valeur correspondante de longueur de la fibre.

2. Procédé selon la revendication 1, caractérisé en ce qu'un adhésif de fusion est appliqué sur la bande métallique et l'adhésif de fusion est durci sur le tambour par solidification.

3. Procédé selon la revendication 1 ou 2, caractérisé en ce que le tambour n'est pas mis en rotation et est chauffé du côté d'alimentation de la bande métallique et est refroidi du côté d'évacuation de la bande métallique.

4. Procédé selon l'une des revendications 1 ou 3, caractérisé en ce qu'après fixation de la fibre optique, la bande métallique est pliée de façon à former un tube et est ensuite scellée par soudage.

5. Procédé selon la revendication 4, caractérisé en ce qu'une mousse ou un gel est appliqué dans la bande métallique pliée.

6. Procédé selon l'une des revendications 1 à 5, caractérisé par l'utilisation d'une bande métallique réalisée en un alliage de Fe-Ni présentant 36% en poids de Ni et une fibre optique en verre de quartz.

7. Procédé selon l'une des revendications 1 à 5, caractérisé par l'utilisation d'une bande métallique en un alliage de Fe-Cr présentant 17 à 19% en poids de Cr et une fibre optique réalisée en verre présentant un coefficient de dilatation thermique de 9 à 11 $\times$ 10$^{-6}$ °C$^{-1}$.

8. Dispositif pour la mise en oeuvre du procédé selon l'une des revendications précédentes, comportant des premiers moyens d'alimentation (1) pour une bande métallique (7), des moyens (3) pour appliquer un adhésif (5) sur la bande métallique, des deuxièmes moyens d'alimentation (2) pour appliquer au moins une fibre optique (8) longitundinalement sur la bande du côté de l'adhésif, un tambour (10) autour duquel est guidée la bande métallique présentant l'adhésif et une fibre optique ou des fibres optiques, le diamètre du tambour correspondant à l'épaisseur de la bande métallique et le diamètre de la fibre optique ou des fibres optiques est choisi de façon que la longueur du trajet de la bande métallique autour du tambour soit plus courte d'au moins 0,5 pour mille que la longueur du trajet de la fibre optique ou des fibres optiques, et des moyens (6) pour durcir d'adhésif pendant son passage autour du tambour.

9. Dispositif selon la revendication 8, comportant en outre des éléments pour le pliage de la bande métallique en un tube et pour son scellement par soudage.

10. Dispositif selon la revendication 8 ou 9 comportant en outre un élément pour appliquer une mousse ou un gel dans la bande pliée.

FIG.1

FIG.2

FIG.3